(19)

Europäisches Patentamt

European Patent Office

Office européen des brevets

(11) **EP 4 764 189 A1**

(12) **EUROPEAN PATENT APPLICATION**

(43) Date of publication:
**24.06.2026 Bulletin 2026/26**

(21) Application number: **24221359.3**

(22) Date of filing: **19.12.2024**

(51) International Patent Classification (IPC):
*F02D 15/02* (2006.01)     *F02D 35/02* (2006.01)
*F02D 41/00* (2006.01)     *F02D 41/14* (2006.01)
*F02D 43/00* (2006.01)

(52) Cooperative Patent Classification (CPC):
**F02D 41/1454; F02D 15/02; F02D 35/023;
F02D 41/0007; F02D 41/0052; F02D 41/144;
F02D 41/1458; F02D 41/1475; F02D 43/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **WinGD Ltd.
8400 Winterthur (CH)**

(72) Inventors:
• **Bouwstra, Allan
  8045 Zürich (CH)**

• **Alder, Roland
  8405 Winterthur (CH)**
• **Lucarelli, Marco
  8050 Zürich (CH)**
• **Rebella, Massimo
  8408 Winterthur (CH)**
• **Christen, Claudio
  8400 Winterthur (CH)**

(74) Representative: **Hepp Wenger Ryffel AG
Friedtalweg 5
9500 Wil (CH)**

(54) **TRAPPED LAMBDA CONTROL**

(57)     The invention relates to an engine control unit (10), to an internal combustion engine (100) and to a method of controlling an internal combustion engine.

The engine control unit (10) for a reciprocating piston combustion engine (100) comprising a VCR system (20) and an EGR system (30). The engine control unit (10) is configured to receive beta data from at least one beta sensor (21) indicative of a combustion speed and to receive lambda data from at least one lambda sensor (31) indicative of a trapped lambda value. The engine control unit (10) is configured to determine a beta value based on the beta data and to determine a trapped lambda value based on the lambda data. The engine control unit (10) is configured to generate a VCR control signal (22) to be emitted to the VCR system (20) indicative of a compression ratio to be set and/or to generate an EGR control signal (32) to be emitted to the EGR system (30) indicative of an EGR rate to be set. The VCR control signal (22) and/or the EGR control signal (32) are based on a beta difference between the beta value and a target beta value and based on a lambda difference between the trapped lambda value and a target trapped lambda value.

**Fig. 1**

**Description**

The invention relates to an engine control unit according to the generic term of claim 1, to an internal combustion engine with such an engine control unit and a method of controlling an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross-head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally scavenged two-stroke engine.

The term internal combustion engine also refers to large engines which can be operated not only in Diesel mode, which is characterized by the self-ignition of the fuel, but also in Otto mode, which is characterized by the forced ignition of the fuel, or in mixtures of the two. Furthermore, the term internal combustion engine includes in particular dual-fuel engines and large engines in which the self-ignition of the fuel is used for the forced ignition of another fuel. Forced ignition can be achieved by use of a pre-chamber, a spark plug and/or a pilot fuel.

Engine speed is preferably below 800 RPM, especially for 4-stroke engines, and more preferably below 200 RPM, especially for 2-stroke engines, which indicates the designation of low-speed engines.

Fuel can be Diesel or marine Diesel oils or heavy fuel oils or emulsions or slurries or methanol or ethanol as well as gases, like liquid natural gas (LNG), liquid petrol gas (LPG), natural gas (NG), petrol gas (PG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

In a reciprocating piston combustion engine, the exhaust gas recirculation (EGR) rate and the compression ratio are important parameters for the combustion, the thermal efficiency and for the exhaust gas emissions.

EP3081790 discloses a dual-fuel combustion engine, wherein the occurrence of pre-ignition can be controlled by introducing inert gas or exhaust gas.

The EGR path of the exhaust gas recirculation system leads from the exhaust outlet of the cylinder to the air inlet of the cylinder. The air inlet of the cylinder may be a scavenge air receiver.

The exhaust outlet of the cylinder may lead to an exhaust gas manifold, where for example the exhaust gas of more than one cylinder is collected.

The engine may comprise a low pressure or a high pressure exhaust gas recirculation system. For engines using high pressure EGR, the exhaust gas is taken directly from the exhaust manifold and combined with the fresh charge air immediately before entering the engine. For low pressure EGR, the exhaust gas volume passes through the turbine, in particular of a turbocharger, and optionally an exhaust gas treatment system.

EGR provides an effective means for reducing flame temperatures and NOx emissions. However, engine thermal efficiency tends to decrease with EGR as a result of decreasing indicated work and increasing pumping work.

Generally, the air-fuel ratio, or lambda number ($\lambda$) determines the mass ratio of air and fuel, as it relates to the stoichiometric air-fuel ratio. Ideally balanced combustion conditions result in neither oxygen starvation nor excess. Thus, a classic lambda closed-loop control may provide a stoichiometric air-fuel mixture for combustion in spark ignition engines.

A lambda number of approximately 1 is typical for premixed gasoline (car-)engines running with a catalytic converter.

For large engines in gas mode having a so called premixed, lean burn combustion, an appropriate lambda value is rather in the range of 2. For an engine without EGR and VCR, a lambda number close to 1 would lead to a high combustion speed. A higher lambda number provides for slowing down the combustion velocity to a range where the involved components do not suffer harm from high temperature and pressure peaks. Further, NOx emissions are kept in an acceptable range.

The lambda number may represent the setpoint control value for both exhaust recirculation and catalytic exhaust gas scrubbing.

In a large diesel engine, the scavenging or charge air is usually provided by a turbocharger, which generates a scavenging or charge air pressure that depends on the load of the engine and thus on the power or torque or speed of the engine. For a given charge air pressure, the mass of air in the cylinder can be calculated and then a suitable quantity of gaseous fuel can be determined for the respective required drive torque generated by the engine or for the desired speed, which leads to an optimum combustion process for this operating state.

In the case of a large engine operated in gas mode according to the Otto principle, the optimum lambda value can be between 2.0 and 3.0, for example, and preferably between 2.3 and 3.0. The limits for the lambda value can shift slightly depending on the load with which the engine is operated.

The compression ratio of an external combustion engine represents the ratio of the volume of its combustion chamber from its largest capacity to its smallest capacity. In a piston engine it is the ratio between the volume of the combustion chamber when the piston is at the bottom of its stroke (bottom dead center), and the volume of the combustion chamber when the piston is at the top of its stroke (top dead center). Hence, the compression ratio may be calculated by the ratio between the sum of the displacement volume and the clearance volume and the clearance volume. The displacement volume is the volume inside the cylinder displaced by the piston from the beginning of the compression stroke to the end of the stroke. The clearance volume is the volume of the space in the cylinder left at the end of the compression stroke.

Instead of the compression ratio as explained above, which might be considered as a geometric compression ratio, sometimes also an "effective compression ratio" is specified. The "effective compression ratio" only considers the compression after the exhaust valve is closed and thus the "effective compression ratio" is less than or equal to the "geometric compression ratio".

The compression ratio is usually chosen to yield the best engine performance. Often the high load engine performance is the most relevant point for the choice. For optimal performance over the whole operating range a variable compression ratio is desirable.

A variable compression ratio (VCR) system is a system for increasing and decreasing the compression ratio of a piston during operation, as for example disclosed in EP2687707A2. A VCR system may comprise a drive mechanism in the piston, in the cross head and/or in the crosshead pin.

The best engine performance may be achieved at an optimal combustion velocity.

EP3748144 A1 discloses a method for operating a large engine, wherein an optimized compression ratio for the air-fuel mixture is determined on the basis of the operating parameter, and the compression ratio is converted to the optimized compression ratio.

It is therefore an objective of the invention to provide an engine control unit, an internal combustion engine, and a method for operating an internal combustion engine, which at least in part avoid the disadvantages of prior art solutions and in particular which enable a more stable engine control regime.

The objective is achieved by an engine control unit according to claim 1.

The engine control unit is for a reciprocating piston combustion engine.

The engine control unit comprises a VCR system and an EGR system.

Typically, the compression ratio may be in a range of 14 and 25. The compression ration may be, preferably continuously during operation, controlled by hydraulic valves.

An EGR system provides for increasing and decreasing the EGR rate. The EGR system may comprise an adjustable exhaust gas valve, an adjustable blower and/or an adjustable back pressure valve for setting the EGR rate.

In particular, the EGR rate may be continuously controlled via large butterfly valves regulating the pressure drop of the EGR path versus the exhaust path.

The engine control unit is configured to receive beta data from at least one beta sensor indicative of a combustion speed.

The beta sensor provides data for calculating a beta value. The beta value is representative for a combustion speed, for example given in pressure per crank angle (bar/°[CA]). The beta sensor may be or may comprise a pressure sensor, which provides pressure data in the combustion chamber over time or over crank angle, respectively.

The engine control unit is configured to receive lambda data from at least one lambda sensor indicative of a trapped lambda value.

The at least one lambda sensor provides data for calculating a trapped lambda value. At least one lambda sensor may be or may comprise an oxygen sensor.

The term "lambda" generally refers to the overall stoichiometric air to fuel ratio. Usually, in internal combustion engines lambda is calculated by dividing the total air consumption by the total fuel consumption. On large 2-stroke engines, an "over-scavenging" should be taken into account, i.e. per cycle the mass of air flow through the cylinder is significantly greater than the mass of air trapped after the exhaust valve closes. It is therefore more useful to refer to a "trapped lambda value", the stoichiometric air to fuel ratio referring to the trapped air mass.

Whereas the beta value may be calculated on basis of a signal measured by the pressure sensor, for example a cylinder pressure sensor, the trapped lambda values usually is calculated on basis of several signals, mainly on basis of an oxygen sensor.

A commonly applied type of lambda sensor measures the overall air to fuel ratio by measuring the excess oxygen in the exhaust. However, as mentioned above, this does not correspond to the trapped lambda.

For measuring the trapped lambda value, an oxygen sensor may be arranged in the scavenge air receiver, where the oxygen concentration may be reduced by EGR.

By applying an engine model, taking into account temperature and pressure signals, the fuel amount and the trapped air mass may be determined. Taking into account the measured oxygen concentration, the trapped stoichiometric air to fuel ratio each cycle may be calculated.

Alternatively, an oxygen/lambda sensor may be arranged in the exhaust instead of in the scavenge air receiver.

The engine control unit is configured to determine a beta value based on the beta data and to determine a trapped lambda value based on the lambda data.

The engine control unit is configured to generate a VCR control signal to be emitted to the VCR system indicative of a compression ratio to be set and/or to generate an EGR control signal to be emitted to the EGR system indicative of an EGR rate to be set. The VCR control signal and/or the EGR control signal are based on a beta difference between the beta value and a target beta value and/or are based on a lambda difference between the trapped lambda value and a target trapped lambda value.

Depending on the beta difference and/or the lambda difference, the engine control unit may be configured to determine that a VCR control signal and/or an EGR control signal is generated.

When the compression ratio is increased, typically the combustion speed increases, which may lead to high pressures. High pressures must be limited to avoid overloading the mechanical components.

A change of the EGR may result in a change in a trapped lambda value and in a changed combustion speed. The latter can be compensated by changing the compression ratio.

By optimizing the compression ratio and the EGR rate, the lowest fuel consumption and eventually the lowest methane emission may be achieved.

As a new beta value is achieved faster than a new trapped lambda value, the VCR control loop may be considered as faster than the EGR control loop. In other words, the VCR control signal may be generated at a higher (refresh) rate than the EGR control signal. Thus, the control loops may be coupled, but not of equal rank. The VCR control may be of a higher rank than (i.e. take precedence over) the EGR control.

In particular, a change of the VCR control signal may result in a corresponding reaction of the combustion speed that is 5-100 times, advantageously 10 times, faster than a reaction of the trapped lambda value in response to a change of the EGR control signal and/or a change of the VCR control signal.

The engine control unit may be configured to generate the VCR control signal faster (at a higher refresh rate) than the EGR control signal. In particular, the VCR control signal is generated 5-100 times, advantageously 10 times, more frequently than the EGR control signal.

The target trapped lambda value may be in a range of 1 to 1.5, in particular in a range of 1.1 to 1.2.

Generally, the beta value may take values in a range of 0 bar/°[CA] to 10 bar/°[CA], wherein 0 bar/°[CA] corresponds to a misfiring event.

The target beta value may be in a range from 5 bar/°[CA] to 10 bar/°[CA], in particular may be 4 bar/°[CA] to 8 bar/°[CA], prferably 6 bar/°[CA].

Preferably the engine is always operated as close as possible to a trapped lambda value of 1.0, without going below 1.0. Below 1.0, there is the risk, that the engine speed control cannot work in a stable manner anymore, and emissions of unburnt fuel may increase.

The VCR control signal and/or an EGR control signal may comprise a step direction and a step size for changing the EGR rate and/or the compression ratio.

The engine control unit may be configured to determine the change direction and/or the amount for changing the EGR rate and/or the compression ratio depending on the beta difference and/or the lambda difference.

The engine control unit may comprise at least one PID controller to control the compression ratio and/or the EGR rate, in particular a separate PID controller for the compression ratio/ VCR control signal and for the EGR rate/ EGR control signal each.

The amount for changing the EGR rate and/or the compression ratio may be a predetermined step size.

In particular, the engine control unit is configured to generate the VCR control signal emitted to the VCR system such that an increase of the compression ratio is induced, when the beta value is below the predetermined target beta value.

An increased compression ratio usually results in a higher combustion speed.

Analogously, the engine control unit may be configured to generate the VCR control signal emitted to the VCR system such that a decrease of the compression ratio is induced, when the beta value is above the target beta value.

A decreased compression ratio usually results in a lower combustion speed.

The more the beta value differs from the predetermined target beta value, the greater may be the step size for changing the compression rate. A PID control may be used.

The engine control unit may be configured to generate an EGR control signal in order to induce an increase of the EGR rate when the trapped lambda value is above the target trapped lambda value.

An increased EGR rate usually results in a lower trapped lambda value.

The engine control unit may be configured to generate an EGR control signal in order to induce a decrease of the EGR rate when the trapped lambda value is below the target trapped lambda value.

A decreased EGR rate usually results in a higher trapped lambda value.

The more the trapped lambda value differs from the target trapped lambda value, the greater may be the step size for changing the EGR rate. A PID control may be used.

Alternatively, the engine control unit may be configured to generate an EGR control signal in dependence of a beta value and to generate a VCR control signal in dependence of the trapped lambda value.

In particular, the engine control unit may be configured to generate a VCR control signal in order to induce a change of the compression ratio when the trapped lambda value differs from the target trapped lambda value.

The more the trapped lambda value differs from the predetermined target trapped lambda value, the greater may be the step size for changing the compression rate. A PID control may be used.

The engine control unit may be configured to generate an EGR control signal in order to induce a change of the EGR rate when the beta value differs from the target beta value.

The more the beta value differs from the target beta value, the greater may be the step size for changing the EGR rate. A PID control may be used.

In this case, the EGR control signal may be generated at a higher (refresh) rate than the VCR control signal. The engine control unit may be configured to generate the VCR control signal to be emitted to the VCR system and to not generate the EGR control signal and/or to not emit the EGR control signal to the EGR system, as long as the lambda difference is below a predetermined threshold, preferably below 0.5, in particular below 0.1, or as long as the trapped lambda value is in a range of 1 to 1.5, in particular in a range of 1.1 to 1.2.

Hence, as long as the trapped lambda value is not below 1.0 and close to 1, the EGR rate does not have to be changed, and any further optimization may be only achieved by a change of the compression ratio.

However, a change of the compression ratio or any other event, such as a changed operation mode or a changed weather condition, may result in a trapped lambda value deviating from a target trapped lambda value by more than a lambda threshold. In this case, the EGR rate has to be changed, which may make necessary also a change of the compression ratio to keep the beta value in an appropriate range.

The engine control unit may be configured to receive and/or store the target beta value and/or the target trapped lambda value and/or any thresholds.

A user may wish to change the target beta value and/or the target trapped lambda value and/or any one or more of the thresholds, for example due to changed operating parameters, and may input new respective values into the engine control unit.

The target beta value and/or the target trapped lambda value and/or any of the thresholds may be stored in a table together with respective engine operating parameters. If the operating parameter, for example the engine load is changed, a new target beta value and/or target trapped lambda value and/or an updated threshold may be set.

The table and/or any of the other values may be determined in a shop trial and stored thereafter or it may be updated/uploaded remotely during use, e.g. via satellite data connections.

The beta data may comprise pressure data as a function of a crank angle as provided by a pressure sensor. The pressure sensor preferably can be arranged in the cylinder. The pressure sensor may also be arranged in the exhaust manifold.

It may also be an option to derive a value indicative of the combustion speed from other sources, such as a sensor for NOx emissions.

The beta value may be derived by an increase of the pressure data over the crank angle in a region of the crank angle before the pressure reaches its maximum.

The increase may be determined by the calculating the derivative or slope of the pressure data over the crank angle in a region of the crank angle before the pressure reaches its maximum. The biggest derivative may be chosen to determine the beta value.

The increase may be determined by dividing the difference between the pressure maximum $p_{max}$ and a reference pressure $p_c$ by the difference between the crank angle at which the pressure maximum arises $\theta pmax$ and a crank angle $\theta_{PIT}$. beta = $(p_{max}-p_c) / (\theta_{pmax}- \theta_{PIT})$

The crank angle $\theta_{PIT}$ may correspond to the crank angle at which a pilot firing event, such as a pilot fuel injection, starts.

Alternatively, the crank angle $\theta_{PIT}$ may correspond to the crank angle at which the combustion starts. The reference pressure $p_c$ may correspond to the, in particular extrapolated, maximum compression pressure in the cylinder.

The increase of the pressure data is representative for the combustion velocity. The faster the combustion, the faster the pressure rises.

The lambda data may comprise oxygen data as provided by an oxygen sensor arranged in the air inlet of the cylinder. Alternatively or additionally, an oxygen- or lambda- sensor may be arranged in the exhaust gas, for example in the exhaust gas manifold.

The lambda data additionally may comprise at least one of the group of

- pressure data indicative of a scavenge air pressure in the cylinder,
- temperature data indicative of a scavenge air temperature in the cylinder, and
- temperature data indicative of a temperature of the exhaust gas upstream of a turbine.

The trapped lambda value may additionally be calculated based on at least one of the group of

- a power, in particular a shaft power of the engine,
- a speed, in particular a rotational speed of the engine,
- a geometric compression ratio, and
- an exhaust valve closing time.

The engine control unit may be configured to receive the beta data from the at least one beta sensor at each 1-10 strokes.

The engine control unit may be configured to receive the lambda data from the at least one lambda sensor each 1-100 strokes, preferably each 5-15 strokes.

The engine control unit may be configured to generate the VCR control signal each 1-10 strokes.

The engine control unit may be configured to generate of EGR control signal each 1-100 strokes, preferably each 5-15 strokes.

The compression ratio typically may react fast on changes in beta. The actual EGR rate typically reacts more slowly to changes in lambda.

However, beta values and trapped lambda values may also be sampled in real time.

The objective of the invention is also achieved by an internal combustion engine comprising at least one cylinder having an inner diameter of at least 200 mm.

The internal combustion engine further comprises a VCR system, an EGR system, at least one beta sensor for measuring beta data indicative of a combustion speed, at least one lambda sensor for measuring lambda data indicative of a trapped lambda value, and an engine control unit as described above.

The objective is also achieved by a method for operating an internal combustion engine as described above.

The method comprises the following steps.

Beta data is received by the engine control unit from the at least one beta sensor.

Lambda data are received from the at least one lambda sensor.

A beta value is determined based on the beta data and a trapped lambda value is determined based on the lambda data.

A VCR control signal to be emitted to the VCR system indicative of a compression ratio to be set is generated. Additionally or alternatively, an EGR control signal to be emitted to the EGR system indicative of an EGR rate to be set is generated.

The VCR control signal and/or the EGR control signal are generated based on a beta difference between the beta value and a target beta value and/or based on a lambda difference between the trapped lambda value and a target trapped lambda value.

Preferably, the VCR control signal and/or the EGR control signal are generated, such that the trapped lambda value is not below 1.0 and as close as possible to 1.0 without jeopardizing the control of being greater or equal 1.0.

Preferably, the VCR control signal and/or the EGR control signal are generated, such that the trapped lambda value is greater than or equal to 1 and less than or equal to 1.2, preferably 1.1.

The VCR control signal may be emitted to the VCR system, which may induce an increase of the compression ratio when the beta value is below the predetermined target beta value and/or which may induce a decrease of the compression ratio when the beta value is above the predetermined target beta value.

The EGR control signal may be emitted to the EGR system, which may induce an increase of the EGR rate when the trapped lambda value is above the predetermined target trapped lambda value and/or which induces a decrease of the EGR rate when the trapped lambda value is below the predetermined target trapped lambda value.

The VCR control signal may be emitted to the VCR system and no EGR control signal may be emitted to the EGR system as long as the lambda difference is below a predetermined threshold, preferably below 0.5, in particular below 0.1, or as long as the trapped lambda value is in a range between 1 and 1.2.

As long as the trapped lambda value is not below 1.0 and close to 1.0 the EGR rate does not have to be changed.

The objective is also achieved by a computer program comprising a program code for carrying out the steps of the method as described above when the program is executed on an engine control unit of an internal combustion engine as described above.

The problem is also solved by a computer program product loadable directly into an internal memory of a digital computer comprising software code portions executing the method steps as described above when the program is running on the digital computer of an internal combustion engine as described above.

Further advantageous aspects of the invention are explained in the following by means of exemplary embodiments and the figures. Functionally equal elements are provided with the same reference signs. In the drawings, in a schematic manner:

Figure 1    schematically shows an internal combustion engine;
Figure 2    schematically shows a beta control loop;
Figure 3    schematically shows a trapped lambda control loop;
Figure 4    shows pressure curve over crank angle.

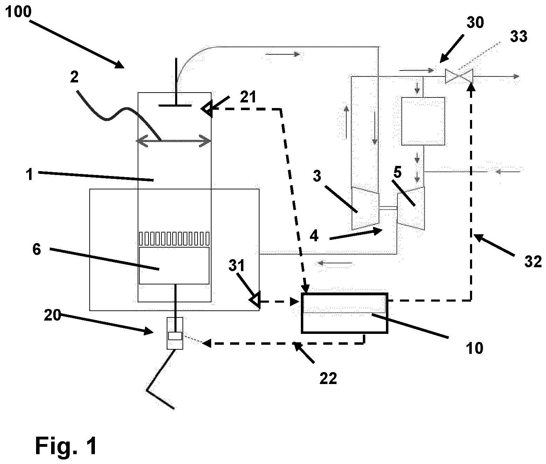

Figure 1 schematically shows an internal combustion engine 100.

The internal combustion engine 100 comprises a cylinder 1 having an inner diameter 2 of at least 200 mm and a reciprocating piston 6.

The internal combustion engine 100 further comprises a VCR system 20 for changing the compression ratio in the cylinder 1 and an EGR system 30 for adapting the rate of recirculated exhaust gas.

Exhausts gas leaving the cylinder 1 is guided to the turbine 3 of a turbocharger 4 before it may be splitted up into part leaving the engine and a part recirculated to the compressor 5 of the turbocharger 4.

An EGR valve 33 is set to control the EGR rate.

An internal combustion engine 100 comprises a beta sensor 21 for measuring beta data indicative of a combustion speed and a lambda sensor 31 for measuring lambda data indicative of a trapped lambda value.

The internal combustion engine 100 comprises an engine control unit 10 which is configured to receive beta data from at least one beta sensor 21 indicative of a combustion speed and to receive lambda data from at least one lambda sensor 31 indicative of a trapped lambda value.

The engine control unit 10 is configured to determine a beta value based on the beta data and to determine a trapped lambda value based on the lambda data.

The engine control unit 10 is configured to generate a VCR control signal 22 to be emitted to the VCR system 20 indicative of a compression ratio to be set and/or to generate an EGR control signal 32 to be emitted to the EGR system (30) indicative of an EGR rate to be set.

The VCR control signal 22 and/or the EGR control signal 32 are based on a beta difference between the beta value and a target beta value and based on a lambda difference between the trapped lambda value and a target trapped lambda value.

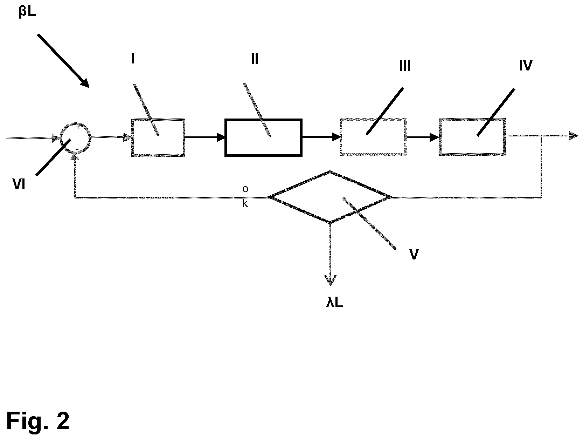

Figure 2 schematically shows a beta control loop $\beta$L.

In a first step I, the compression ratio is kept constant or is increased by a compression ratio step $\Delta$CR or is decreased by a compression ratio step $\Delta$CR. The decision depends on the outcome of step VI (see below).

In a second step II, if the compression ratio is kept constant, the combustion speed generally remains constant, too. If the compression ratio has been increased or decreased, generally, in the second step II the combustion speed changes.

In a third step III, the pressure within the cylinder is measured over time, that is over crank angle.

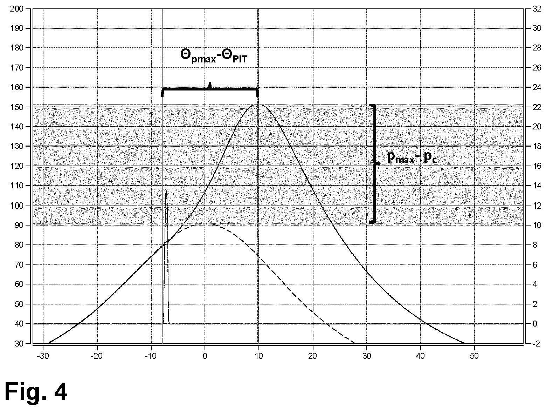

In a fourth step IV, a beta value is determined (see for example figure 4).

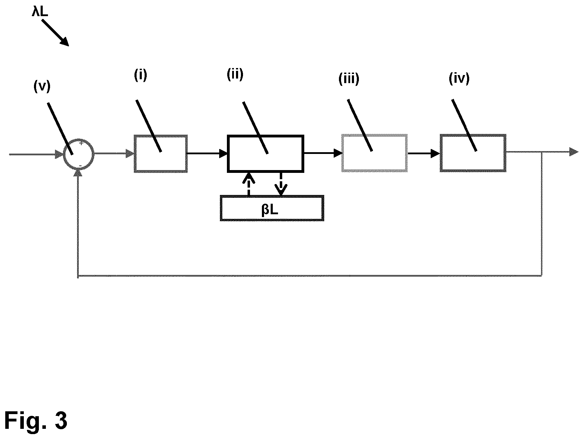

In an optional fifth step V, the trapped lambda value may be checked (see step (v) in Figure 3).

If the trapped lambda value still is close to 1.0 and not below 1.0, in step VI, the beta value is compared to a target beta value and, if necessary, a compression ratio step $\Delta$CR is set.

The beta value may have changed due to a changed compression rate and/or due to other factors, such as a changed EGR rate.

Figure 3 schematically shows a trapped lambda control loop XL.

In a first step (i), the EGR rate is kept constant or is increased by a EGR rate step $\Delta$EGR or is decreased by a EGR rate step $\Delta$EGR. The decision and the step size depend on the outcome of step (v) (see below).

Preferably the EGR rate is changed by opening or closing the EGR valve 33 (see figure 1) or by adjusting the throughput thereof.

If the EGR rate has been increased or decreased, generally, in a second step (ii) the amount of oxygen in the air inlet and/or in the exhaust gas changes due to a changed trapped lambda value.

Additionally, the combustion speed may change, which can be compensated in a beta control loop $\beta$L as shown in Figure 2.

In a third step (iii), at least the oxygen content within the air inlet and/or within the exhaust gas is measured. Further data may be determined, such as pressure date indicative of a scavenge air pressure and/or temperature data.

In a fourth step (iv), a trapped lambda value is determined on basis of the values measured in step (iii).

In a fifth step (v), the trapped lambda value is compared with a target trapped lambda value. If necessary, an EGR step $\Delta$EGR is set.

Figure 4 shows in solid line a combustion pressure curve over crank angle, shown in the horizontal axis. The combustion pressure is related to the left ordinate which shows the values in bar.

A dashed line represents the motoring pressure over crank angle without combustion.

A dotted line represents a pilot injection over time and shows the current of the pilot injection valve over crank angle. The pilot injection curve is related to the right ordinate which shows current values in Ampere [A].

The increase of the combustion pressure corresponds to the combustion velocity.

The increase or beta value may be determined by dividing the difference between the maximum pressure of the combustion pressure curve $p_{max}$ and the maximum compression pressure $p_c$, which corresponds to the maximum of the motoring pressure curve, by the difference between the crank angle $\theta_{pmax}$ at the maximum combustion pressure and the crank angle $\theta_{PIT}$ at the beginning of the pilot injection.

$$(p_{max} - p_c) / (\theta_{pmax} - \theta_{PIT}) = \beta$$

## Claims

1. An engine control unit (10) for a reciprocating piston combustion engine (100) comprising a VCR system (20) and an EGR system (30),

   - wherein the engine control unit (10) is configured to receive beta data from at least one beta sensor (21) indicative of a combustion speed and
   to receive lambda data from at least one lambda sensor (31) indicative of a trapped lambda value;
   - wherein the engine control unit (10) is configured to determine a beta value based on the beta data and to determine a trapped lambda value based on the lambda data;
   - wherein the engine control unit (10) is configured to generate a VCR control signal (22) to be emitted to the VCR system (20) indicative of a compression ratio to be set and/or to generate an EGR control signal (32) to be emitted to the EGR system (30) indicative of an EGR rate to be set,

     wherein the VCR control signal (22) and/or the EGR control signal (32) are
     based on a beta difference between the beta value and a target beta value
     and/or
     based on a lambda difference between the trapped lambda value and a target trapped lambda value.

2. The engine control unit according to claim 1,

   wherein the target trapped lambda value is in a range of 1 to 1.5, in particular in a range of 1 to 1.1,
   and/or
   wherein the target beta value is in a range from 5 bar/°[CA] to 10 bar/°[CA], in particular is 6 bar/°[CA].

3. The engine control unit according to any of the preceding claims configured to generate the VCR control signal (22) and the EGR control signal (32) such that the VCR control signal (22) takes precedence over the EGR control signal (32),
   and in particular wherein the VCR control signal (22) is generated at a higher rate than the EGR control signal (32), such that a reaction of the combustion speed is 5-100 times, advantageously 10 times, faster than a reaction of the trapped lambda value.

4. The engine control unit according to any of the preceding claims, wherein the engine control unit is configured to generate the VCR control signal such that an increase of the compression ratio is induced when the beta value is below a predetermined target beta value
   and/or
   to generate the VCR control signal such that a decrease of the compression ratio is induced when the beta value is above a predetermined target beta value.

5. The engine control unit according to any of the preceding claims, wherein

   the engine control unit is configured
   to generate the EGR control signal such that an increase of the EGR rate is induced when the trapped lambda value is above a predetermined target trapped lambda value and/or the engine control unit is configured
   to generate an EGR control signal such that a decrease of the EGR rate is induced when the trapped lambda value is below a predetermined target trapped lambda value.

6. The engine control unit according to any of the preceding claims,

   wherein the engine control unit is configured to generate the VCR control signal
   and
   to not generate the EGR control signal and/or to not emit the EGR control signal to the EGR system,
   as long as the lambda difference is below a predetermined threshold, preferably below 0.5, in particular below 0.1,
   or
   as long as the trapped lambda value is in a range of 1 to 1.5, in particular in a range of 1.1 to 1.2.

7. The engine control unit according to any of the preceding claims,
   wherein the engine control unit is configured to receive and/or store a target beta value and/or a target trapped lambda value.

8. The engine control unit according to any of the preceding claims, wherein the beta data comprises pressure data as a function of a crank angle as provided by a pressure sensor, preferably arranged in the cylinder.

9. The engine control unit according to claim 8, wherein the beta value is derived by an increase of the pressure data over the crank angle in a region of the crank angle before the pressure reaches its maximum.

10. The engine control unit according to any of the preceding claims, wherein the lambda data comprises oxygen data as provided by an oxygen sensor arranged in the air inlet of the cylinder.

11. The engine control unit according to claim 10,

    wherein the lambda data additionally comprises at least one of the group of

    o pressure data indicative of a scavenge air pressure in the cylinder,
    o temperature data indicative of a scavenge air temperature in the cylinder, and
    o temperature data indicative of a temperature of the exhaust gas upstream of a turbine,

    and/or
    wherein the trapped lambda value is calculated based on at least one of the group of

    o a power, in particular a shaft power of the engine,
    o a speed, in particular a rotational speed of the engine,
    o a geometric compression ratio, and
    o an exhaust valve closing time.

12. An internal combustion engine (100) with at least one cylinder (1) having an inner diameter (2) of at least 200 mm, the internal combustion engine (100) comprising

    - a VCR system (20),
    - an EGR system (30),
    - at least one beta sensor (21) for measuring beta data indicative of a combustion speed,
    - at least one lambda sensor (31) for measuring lambda data indicative of a trapped lambda value, and
    - an engine control unit (10) according to any one of the claims 1 to 11.

13. A method for operating an internal combustion engine according to claim 12, the method comprising steps of

    - receiving beta data from the at least one beta sensor;
    - receiving lambda data from the at least one lambda sensor;
    - determining a beta value based on the beta data;
    - determining a trapped lambda value based on the lambda data;
    - generating a VCR control signal to be emitted to the VCR system indicative of a compression ratio to be set and/or generating an EGR control signal to be emitted to the EGR system indicative of an EGR rate to be set, wherein the VCR control signal and/or the EGR control signal are generated based on a beta difference between the beta value and a target beta value and/or based on a lambda difference between the trapped lambda value and a target trapped lambda value.

14. The method according to claim 13, wherein the VCR control signal is emitted to the VCR system and induces an increase of the compression ratio when the beta value is below a predetermined target beta value and/or induces a decrease of the compression ratio when the beta value is above a predetermined target beta value.

15. The method according to any of the claims 13 or 14, wherein the EGR control signal is emitted to the EGR system and induces an increase of the EGR rate when the trapped lambda value is above a predetermined target trapped lambda value and/or induces a decrease of the EGR rate when the trapped lambda value is below a predetermined target trapped lambda value.

16. The method according to any of the claims 13-15, wherein the VCR control signal is emitted to the VCR system and no EGR control signal is emitted to the EGR system as long as the lambda difference is below a predetermined threshold, preferably below 0.5, in particular below 0.1,
and/or
as long as the trapped lambda value is in a range between 1 and 1.5, in particular range between 1 and 1.1.

Fig. 1

Fig. 2

**Fig. 3**

Fig. 4

Europäisches
Patentamt

European
Patent Office

Office européen
des brevets

**EUROPEAN SEARCH REPORT**

Application Number

EP 24 22 1359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 156 626 A1 (DELPHI TECH INC [US]) 19 April 2017 (2017-04-19) * paragraphs [0014], [0015], [0027], [0063], [0088], [0096], [0101]; claims 1-13; figures 1-8 * | 1-16 | INV. F02D15/02 F02D35/02 F02D41/00 F02D41/14 F02D43/00 |
| X | DE 10 2012 204992 A1 (GM GLOBAL TECH OPERATIONS INC [US]) 4 October 2012 (2012-10-04) * paragraphs [0030], [0031], [0035] - [0044]; claims 1-9; figure 1 * | 1,8, 10-13 | |
| X | EP 4 227 505 A1 (WINTERTHUR GAS & DIESEL LTD [CH]) 16 August 2023 (2023-08-16) * paragraphs [0033], [0069], [0082], [0083]; claims 1-11; figures 1-4 * | 1,12,13 | |
| A | EP 3 748 144 A1 (WINTERTHUR GAS & DIESEL AG [CH]) 9 December 2020 (2020-12-09) * claim 1; figure 1 * | 1,13 | |

TECHNICAL FIELDS
SEARCHED (IPC)

F02D

The present search report has been drawn up for all claims

| Place of search | Date of completion of the search | Examiner |
|---|---|---|
| The Hague | 2 June 2025 | Boye, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 22 1359

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2025

| Patent document cited in search report | | Publication date | Patent family member(s) | | Publication date |
|---|---|---|---|---|---|
| EP 3156626 | A1 | 19-04-2017 | EP | 3156626 A1 | 19-04-2017 |
| | | | US | 2017107920 A1 | 20-04-2017 |
| DE 102012204992 | A1 | 04-10-2012 | CN | 102734002 A | 17-10-2012 |
| | | | DE | 102012204992 A1 | 04-10-2012 |
| | | | US | 2012247439 A1 | 04-10-2012 |
| EP 4227505 | A1 | 16-08-2023 | CN | 116576029 A | 11-08-2023 |
| | | | EP | 4227505 A1 | 16-08-2023 |
| | | | JP | 2023117385 A | 23-08-2023 |
| | | | KR | 20230120989 A | 17-08-2023 |
| EP 3748144 | A1 | 09-12-2020 | CN | 112031941 A | 04-12-2020 |
| | | | EP | 3748144 A1 | 09-12-2020 |
| | | | JP | 7609572 B2 | 07-01-2025 |
| | | | JP | 2020197215 A | 10-12-2020 |
| | | | JP | 2025041744 A | 26-03-2025 |
| | | | KR | 20200139626 A | 14-12-2020 |
| | | | KR | 20240166973 A | 26-11-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3081790 A
- EP 2687707 A2

- EP 3748144 A1